(19) Europäisches Patentamt / European Patent Office / Office européen des brevets

(11) **EP 2 237 479 A1**

(12) **EUROPEAN PATENT APPLICATION**

(43) Date of publication:
06.10.2010 Bulletin 2010/40

(51) Int Cl.:
*H04L 12/24* (2006.01)

(21) Application number: 09250992.6

(22) Date of filing: 31.03.2009

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

(71) Applicant: BRITISH TELECOMMUNICATIONS public limited company
London
EC1A 7AJ (GB)

(72) Inventor: **The designation of the inventor has not yet been filed**

(74) Representative: **Geffen, Nigel Paul et al**
**BT Group Legal**
**Intellectual Property Department**
**PP C5A, BT Centre**
**81 Newgate Street**
**London**
**EC1A 7AJ (GB)**

(54) **Restoration planning in a packet network**

(57) Examples of the invention generate restoration plans (444) defining how data traffic should be moved from one path to another in the event of a predetermined failure in dependence on present load data (427) received from nodes in the network. In preferred examples the calculation of the restoration plans (444) is performed using a linear programming optimisation function that optimises the value obtained by the network in admitting additional flows versus the additional restoration cost that would be incurred in the event of one or more predetermined failures. In addition, preferred examples also calculate admission control parameters to be used by ingress nodes which, when used to control admission of new flows, ensures that the restoration plans should be successful in the event of failures. By integrating admission control (42) and restoration planning (44) in this manner, resilience and resource utilisation in the network are improved.

Figure 4

**Description**

<u>Technical Field</u>

The present invention relates to a method and system for determining restoration paths in a packet network. In preferred exemplary embodiments of the invention restoration paths and the loading to be placed thereon are dynamically generated or updated in dependence on load or congestion measures of present traffic loading in the network.

<u>Background to the Invention</u>

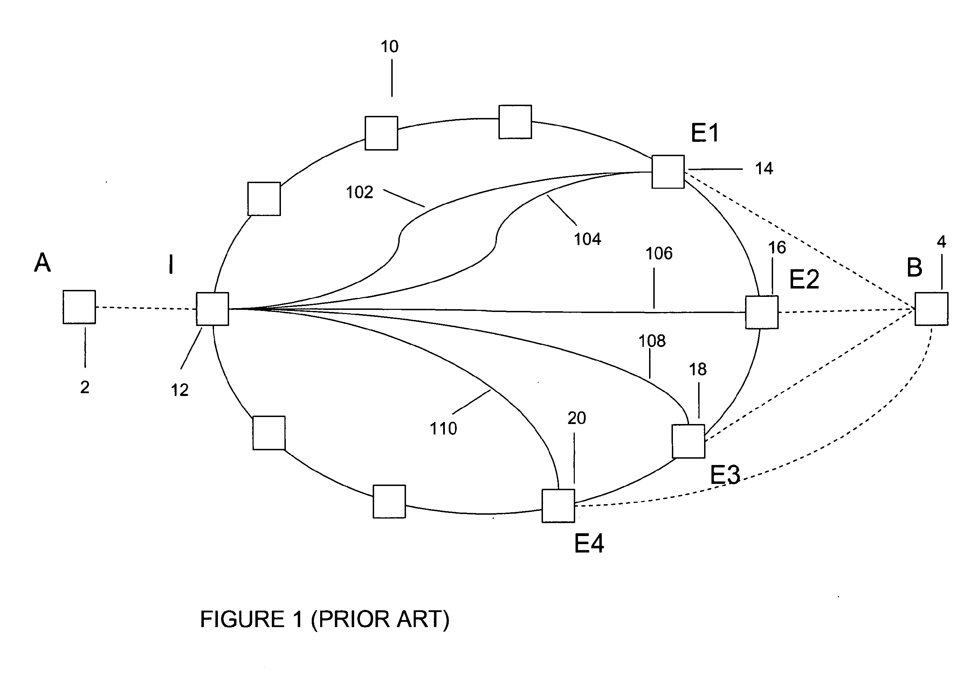

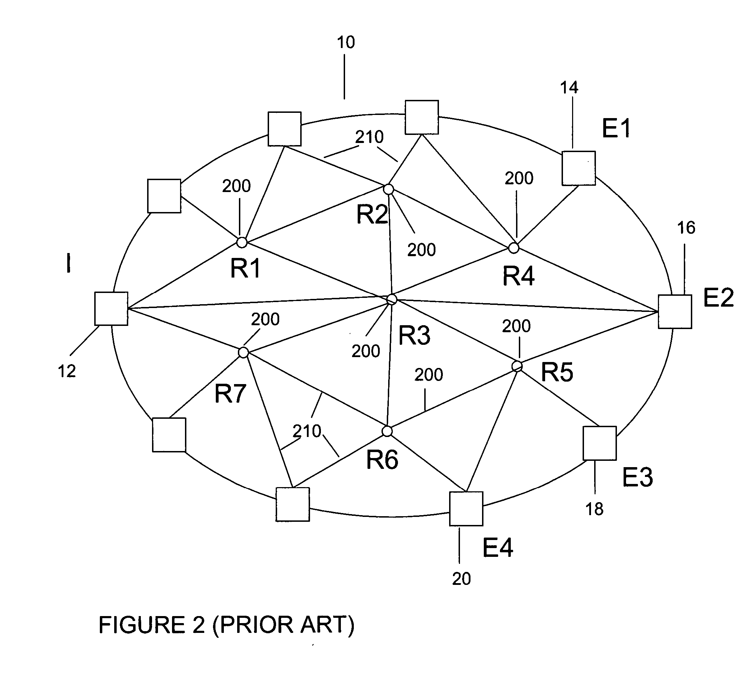

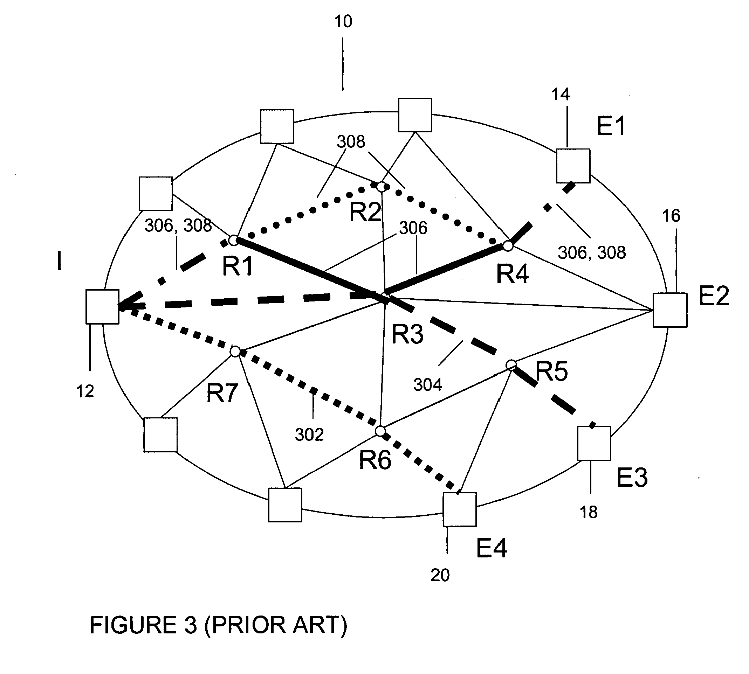

Packet networks such as Internet Protocol (IP) networks, multi-protocol label switched (MPLS) networks, or Ethernet networks are of increasing importance in next generation communications networks. Typically, and with reference to Figure 1, a packet network 10 accepts traffic at an ingress gateway node I (12) from a source node A (2) outside the network 10 and destined for destination node B (4). In order to transport the traffic to the destination node B, the network must route the traffic on to one of a number of available paths through the network destined for specific egress nodes from which the traffic can then be forwarded on in the direction of destination node B. Admission control (i.e. deciding whether to admit the data flow in the first place) and path selection (i.e. deciding which route to take through the network from an ingress node to an egress node) are typically performed by the ingress node, although may also be performed centrally by a network management element. For each ingress-egress pair (IEP) of gateway nodes, one or more paths may exist through the network infrastructure. For example, in Figure 1, multiple paths 102 and 103 exist between gateway nodes I and E1 (I-E1), whereas single paths 106, 108, and 110 exist between IEPs I-E2, I-E3, and I-E4.
Whilst Figure 1 shows the IEPs logically across the network, in reality each path between each IEP is formed from the network infrastructure, and in particular by links between routers or switches within the network. As shown in Figure 2, a typical network comprises internal routers or switches 200 , having interconnecting links 210 therebetween, over which data traffic is transmitted. Data progresses through the network on a hop by hop basis from router/switch to router/switch, as is well known in the art. Figure 3 shows how paths between IEPs are formed from the links, and how multiple paths can share the same link. For example, a first path 302 between IEP I-E4 is formed by the links between I and R7, R7 and R6, and R6 and E4. A second path 304 for IEP I-E3 is formed by links: I-R3, R3-R5; and R5-E3. IEP I-E1 has two paths assigned to it (as shown in Figure 1), and these paths share some of the same links. For example, path 306, follows the route: I-R1-R3-R4-E1, where as path 308 follows the route I-R1-R2-R4-E1. The links I-R1 and R4-E1 are therefore shared by these two paths.
Typically, the number of available routes between an ingress and egress node grows exponentially with the number of links in the network. Experience shows that only a small number of these routes need to be used to carry all traffic. If a large number of routes can be eliminated from consideration at an early stage, then the effort the network has to put in measuring and maintaining information on which it has to base its routing assignment decisions can be reduced.
However, when a network element (e.g., a node or a link) fails, remedial actions have to be taken to ensure that the impact of such a network fault on already admitted sessions is as small as possible. This may involve re-assigning affected sessions to alternative paths connecting the same sources and destinations but not affected by the identified network fault. In some cases it may not be possible to reassign all sessions, in which case some sessions may have to be terminated. Deciding how to deal with potential failures is known as restoration design. Typically, a certain amount of network resources is reserved for protection purposes. Then, for each of a number of possible failure scenarios, a restoration plan is established, which captures how the protection capacity should be used when that scenario materialises. Whenever a particular failure occurs, the corresponding restoration plan is executed. More specifically, a typical restoration plan specifies how much load $X$ from a first path $p$ should be re-routed onto path $q$ in the event of failure $f$.

This may be captured by a variable $x_{pq_1}^{f}$ , with a complete restoration plan containing such a variable for each path present in the network, for each possible failure i.e. the there may typically be the product $f*p$ such variables in a complete restoration plan. In normal operation, whenever a new session arrives, the admission control system of the network has to decide whether or not to admit that session and also decide over which path the session should be carried. In order to be able to do that, the admission control system has to be relatively lightweight and the computational effort required in making such a decision should be small. Restoration design, on the other hand, deals with rare events that affect many sessions simultaneously. The restoration design is typically only updated after significant changes in the network or in the traffic patterns and the associated computations can take a long time (from minutes to even a number of days). As a consequence, restoration design (i.e. producing a restoration plan) is usually viewed as an off-line problem and described independently of real-time control processes. Because of these significant differences between the two systems, they are typically designed more or less independently of each other. Yet both admission control and restoration design are important tools for a network provider who wants to guarantee a good user experience, while making efficient use of network resources.

Summary of Examples of the Invention

Examples of the invention generate restoration plans defining how data traffic should be moved from one path to another in the event of a predetermined failure in dependence on present actual load data received from nodes in the network. In preferred examples the calculation of the restoration plans is performed using a linear programming optimisation function that optimises the value obtained by the network in admitting additional flows versus the additional restoration cost that would be incurred in the event of one or more predetermined failures. In addition, preferred examples also calculate admission control parameters to be used by ingress nodes which, when used to control admission of new flows, ensures that the restoration plans should be successful in the event of failures. By integrating admission control and restoration planning in this manner, resilience and resource utilisation in the network are improved.

In view of the above, one example of the invention according to a first aspect provides a method of generating restoration plans for a packet network, comprising the steps: a) receiving load data relating to present data traffic in the network; b) determining restoration plans in dependence on the received load data, said restoration plans defining the movement of data traffic from one path to another in the event of one or more predetermined network failures; and c) communicating said restoration plans to one or more network elements.

In the example the restoration plans may be communicated when a failure occurs, or they may be communicated in advance. If the plans are communicated when a failure occurs, then preferably the plans relating to the failure that has occurred are communicated. If they are communicated in advance, then preferably the restoration plans relating to multiple possible failure scenarios are communicated.

The restoration plans may be communicated to network nodes. In preferred embodiments, the restoration plans are communicated to ingress nodes, for use thereat. In other embodiments, the restoration plans are communicated to a proxy element, that then controls the network node in accordance with the restoration plans.

In a further example, the restoration plans may not be communicated at all, and instead discarded or not used. This may be where the purpose of the generation of the plans is to obtain admission control parameters to be used in admission control decisions.

In one example the determining step b) is performed using an optimisation function that substantially maximises the value to the network of admitting additional data traffic versus the additional restoration cost of such extra traffic.

In another example, there is also performed the step of determining one or more admission control parameters in dependence on the received load data, said admission control parameters being communicated to one or more admission control network elements for use in admission control decisions. As noted, in this example, the restoration plans that are obtained may not be used, and may be discarded. More preferably, however, the restoration plans and admission control parameters are both used, and would typically complement each other.

In the above example, the restoration plans and admission control parameters are most preferably obtained together from the result of solving a linear programming optimisation function. In this way, optimal restoration plans may be obtained, together with admission control parameters that help to ensure that data traffic is admitted to the network in a manner in which the restoration plans can be applied e.g. not too much traffic is admitted such that the restoration plans become obsolete or invalid.

Preferably, in the above example the admission control parameters are path upper bound values to be used as an input to a path load cost function. The path load cost function is used to find a path load cost for a path in the network, which can then be used in the admission control decision as to whether a particular data flow or data session should be admitted onto that path.

The path load cost function is preferably of a form that generates a low path load cost when the present path loading is not near to the upper bound, and very high path load cost when the present path loading is above, or near to by a particular amount, the path upper bound. The path load costs thus found are relative to the arbitrary value variables used to indicate the value of data flows to the network. That is, a low path load cost should be the range such that it is low compared to the value variables, whereas a high path load costs should be high compared to the value variables.

In another example the method further includes finding additional paths between ingress and egress nodes in the network using a shortest path finding algorithm that uses respective link shadow variables obtained from the determining step b), and repeating the determining step b) including the additional paths. The link shadow variables are dual variables that represent the extra value to the network that may be generated if the capacity of a link $l$ in a failure scenario $f$ would have been one (small) unit higher.

In the above example, the determining step b) is preferably repeated until there is no substantial improvement in the restoration plans or admission control parameters obtained. The step may be repeated for a predetermined number of times, or until an improvement threshold is reached.

From a second aspect an example of the invention further provides a method of operating a network element in a packet network, comprising the steps: receiving one or more restoration plans from a restoration sub-system, said restoration plans defining the movement of data traffic from one path to another in the event of one or more predetermined network failures, and having been generated according to any of the examples of the first aspect; and executing at least one of said plurality of restoration plans relating to a predetermined failure in the event of such failure occurring.

In a further example according to this aspect, preferably the method also includes sending load data relating to present data traffic on paths in the network to a restoration sub-system. Hence, the same element that receives the restoration plans, also sends the load data.

In these examples the network element is preferably a network node, and more preferably an ingress node. However, other network elements may be envisaged, such as a proxy element that collates load data from multiple nodes to be sent to the restoration sub-system, and receives the restoration plans back from the restoration sub-system.

As noted previously, the restoration plans may be received in advance of a failure, or may be received when a failure has occurred. If received when a failure has occurred, then the restoration plans received preferably relate to that specific failure. If received in advance, then restoration plans for multiple failure scenarios are typically received.

In one preferred example, admission control is also performed to determine whether data sessions should be admitted to the network. The network element receives at least one admission control parameter from the restoration sub-system, and performs admission control in dependence on said received parameter.

In a related example forming a third aspect of the invention, there is provided a method of operating a network element in a packet network, comprising the steps: performing admission control to determine whether data sessions should be admitted to the network; receiving at least one admission control parameter from a restoration sub-system, the admission control parameter having been obtained during the generation of one or more restoration plans defining the movement of data traffic from one path to another in the event of one or more predetermined network failures; said admission control being performed in dependence on said received parameter.

In examples according to both the second and third aspects the at least one admission control parameter is preferably a path upper bound relating to a path in the network, said network element further: calculating a path load cost in dependence on the path upper bound and a present path load, and admitting a new data flow to the network in dependence on a comparison of a value measure of the new flow with at least the calculated path load cost. Preferably the network element is a network node, and more preferably an ingress node. Further details of the path load cost function that provides the path load cost were given earlier.

Following the above, more preferably a congestion measure for a path from the node is determined, relating to congestion on the path caused by presently admitted packet flows; and the new data flow is admitted to the network in dependence on a comparison of the value measure with the calculated path load cost and the congestion measure.

From a fourth aspect an example of the invention further provides a computer program or suite of computer programs arranged such that when executed by a computer system it/they cause the computer system to operate in accordance with any of the preceding claims; and/or a machine readable storage medium storing said computer program or at least one of the suite of computer programs. With such a computer program or suite of computer programs, the network elements and restoration sub-system provided by examples of the invention may be implemented as computer systems controlled by appropriate software to perform the required functions.

In addition to all of the above, an example according to a fifth aspect of the invention provides a restoration sub-system arranged in use to generate restoration plans for a packet network, the restoration sub-system comprising :
a) a node interface that in use receives load data relating to present data traffic in the network and communicates restoration plans to one or more network elements b) a restoration plan calculator that in use determines restoration plans in dependence on the received load data, said restoration plans defining the movement of data traffic from one path to another in the event of one or more predetermined network failures.

As noted previously, in the example the restoration plans may be communicated when a failure occurs, or they may be communicated in advance. If the plans are communicated when a failure occurs, then preferably the plans relating to the failure that has occurred are communicated. If they are communicated in advance, then preferably the restoration plans relating to the possible failure scenarios are communicated.

The restoration plans may be communicated to network nodes. In preferred embodiments, the restoration plans are communicated to ingress nodes, for use thereat. In other embodiments, the restoration plans are communicated to a proxy element, that then controls the network node in accordance with the restoration plans.

In a further example, the restoration plans may not be communicated at all, and instead discarded or not used. This may be where the purpose of the generation of the plans is to obtain admission control parameters to be used in admission control decisions.

The various further features, advantages, and modifications described above in respect of the first aspect may also be applied here.

An example according to another aspect of the invention provides a network element in a packet network, comprising: a communications interface arranged in use to receive a plurality of restoration plans from a restoration sub-system of the previous aspect, said restoration plans defining the movement of data traffic from one path to another in the event of one or more predetermined network failures; and a controller that in use executes at least one of said plurality of restoration plans relating to a predetermined failure in the event of such failure occurring.

Here, all of the further features, advantages, and modifications described above in respect of the second aspect may also be applied.

An example according to a further aspect of the invention also provides a network element in a packet network, comprising: an admission control sub-system that in use determines whether data sessions should be admitted to the network; and an interface that in use receives at least one admission control parameter from a restoration sub-system, the admission control parameter having been obtained from the generation of one or more restoration plans defining the movement of data traffic from one path to another in the event of one or more predetermined network failures; said admission control subsystem then determining whether data sessions should be admitted to the network n dependence on said received parameter.

Here, all of the further features, advantages, and modifications described above in respect of the third aspect may also be applied.

Brief Description of the Drawings

Further features and advantages of embodiments of the present invention will become apparent from the following description thereof, presented by way of example only, and by reference to the accompanying drawings, wherein like reference numerals refer to like parts, and wherein: -

Figure 1 is a diagram illustrating a typical network of the prior art;
Figure 2 is a further diagram illustrating a typical network of the prior art;
Figure 3 is a further diagram illustrating paths and links through a network of the prior art;
Figure 4 is a block diagram showing an overview of embodiments of the invention;
Figure 5 is a flow diagram of a process used in a first embodiment of the invention;
Figure 6 is a flow diagram illustrating a process used in a first embodiment of the invention;
Figure 7 is a diagram illustrating components of a first embodiment of the invention;
Figure 8 is a block diagram illustrating the components of an ingress node used in a first embodiment of the invention;
Figure 9 is a flow diagram illustrating a process used in the first embodiment of the invention;
Figure 10 is a graph of a path load cost function used in the first embodiment of the invention;
Figure 11 is a block diagram of the components of a restoration subsystem used in the first embodiment of the invention;
Figure 12 is a flow diagram illustrating the operation of the restoration subsystem of the first embodiment of the invention;
Figure 13 is a block diagram of a restoration subsystem used in a second embodiment of the invention; and
Figure 14 is a flow diagram illustrating the operation of the restoration subsystem used in the second embodiment of the invention.

Description of the Embodiments

A brief overview of embodiments of the invention will be described next, followed by detailed descriptions of embodiments.

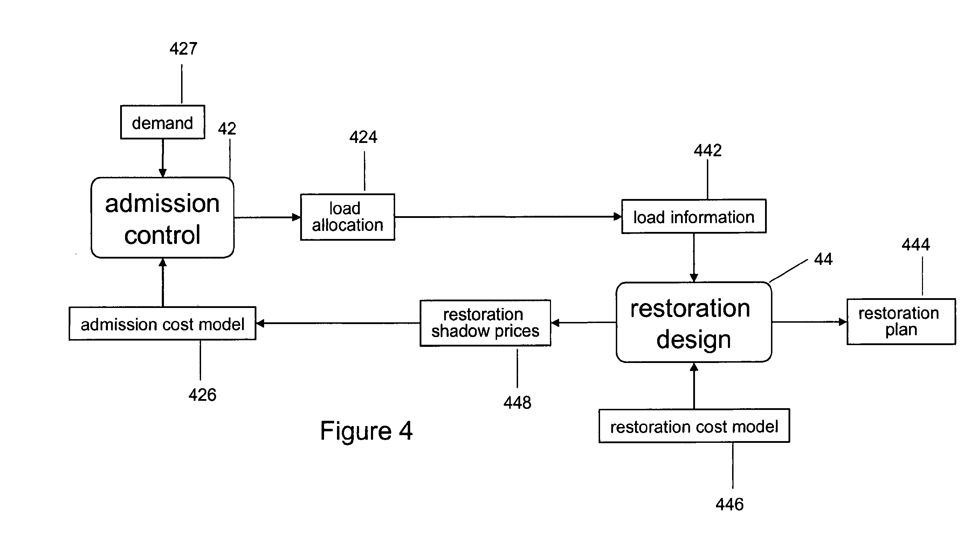

Figure 4 shows, at a high level of abstraction, different components of an admission control system, and a restoration design system. It also shows how, according to examples of the invention, the two systems may be integrated.

Dealing with the operation of the admission control system 42 in isolation first, an "admission cost model" 426 is maintained at network gateways, or possibly in a centralised management system. This model captures the cost incurred if a particular admission decision is made. For example, a numerical cost term for each possible path over which sessions can be carried may be maintained. Alternatively, one could have a simple cost model that gives a "high" cost if an extra admission leads to overload and "low" cost otherwise.

Demand (in the form of session requests 427) arrives at a network gateway hosting the admission control system. We assume that sessions come with an associated value. For example, the session values may be represented explicitly as numbers, but one could imagine a setting in which all sessions have a default "medium" value.

The admission control system 42 then compares, for each arriving session, the session value with the cost of each possible admission decision, and enforces the decision that maximises value minus cost. For example, a session may be admitted to the lowest cost path as long as that path cost is less than the session value. Alternatively, all "medium" valued sessions can be admitted as long as the admission cost is "low".

Turning now to the restoration design system 44, and the operation thereof in isolation, the restoration design system 44 makes use of a "restoration cost model" 446. This model captures the cost incurred when a particular restoration plan is executed. Typically, restoration plans that result in the termination of a high number of sessions will lead to higher costs than plans that manage to re-allocate all active sessions to alternative paths.

The system also obtains information about the load on the network, in the form of load information 442. If a restoration design problem is solved once and for all this information may be based on a worst-case traffic scenario. If the design is updated more frequently, the load information may reflect expectations about load patterns in the immediate future. The restoration design system 44 then finds for each possible failure scenario, and for the load levels considered, restoration plans that minimise the (expected) restoration costs.

Examples of the present invention integrate the admission control and restoration systems, to provide a system that performs restoration planning in dependence on present load as reported by the admission control system. In addition, the restoration plan that results is then used in turn to modify the admission control parameters, for example to admit more or fewer sessions to the network, as appropriate. Two links between the two systems are introduced to achieve this result, as described next. First, information 424 about the actual load allocation (as determined by the admission control system) is fed into the load model 442 used by the restoration design system. This makes it possible to re-compute the optimal restoration plans whenever the load levels change.

Secondly, information 448 about the expected restoration costs, obtained as a by-product of solving the restoration design problem, is passed back to the admission control system to be incorporated in its admission cost model. This makes it possible to restrict the load in the network to levels at which the restoration mechanism is expected to work adequately.

The integration of the two mechanisms will make it possible to maximise the expected overall value (i.e., the value of carried sessions *minus* the expected cost incurred in dealing with failures). By assigning a lower or higher weight to the restoration costs this will enable a network manager to explore the trade-off between utilisation and resilience, and hence the network can make the most efficient use of its resources, while still providing the desired levels of resilience.

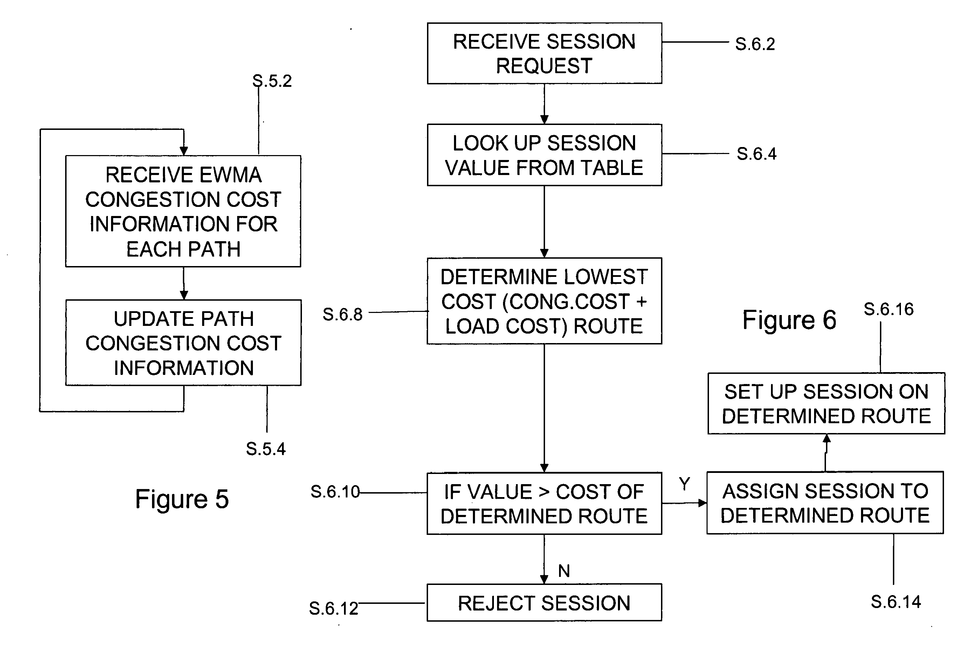

A first detailed embodiment of the present invention will now be described with respect to Figures 5 to 12.

The first embodiment of the invention to be described is based upon an admission control system in which a session, upon arrival, can either be rejected or assigned to any of a number of suitable paths through the network. Each ingress gateway maintains information about the costs associated with the various paths that start there and uses these costs to determine to which path, if any, a session should be assigned. Typically, a session will be assigned to the minimum cost path as long as the value of the session exceeds this cost. Different types of sessions may have different values and the path costs may be computed in various ways.

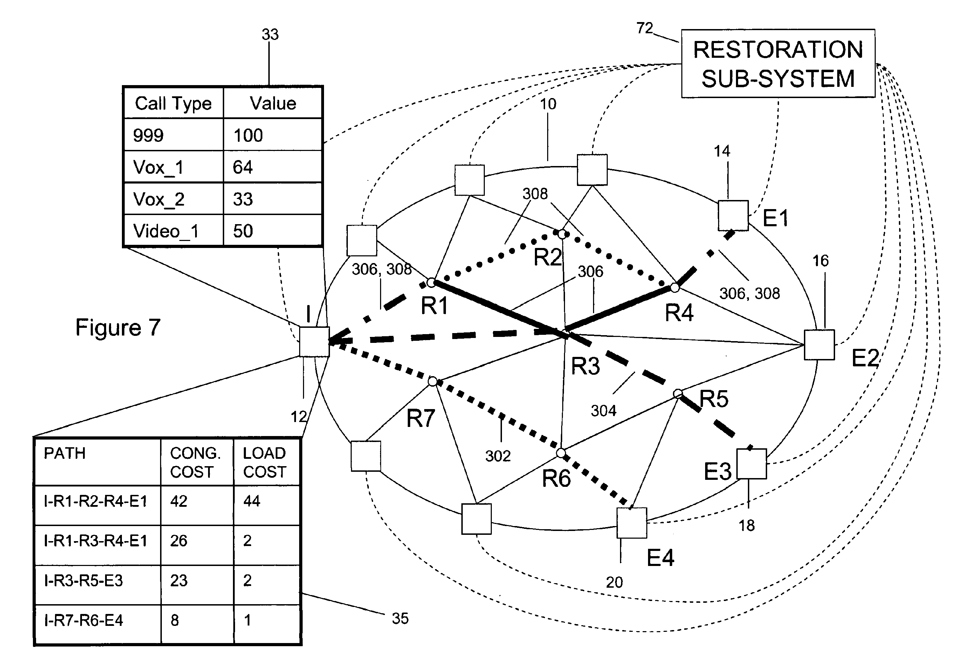

More particularly, Figure 7 is a diagram of a network 10 which makes use of an admission control and routing arrangement that forms the basis of the first embodiment. The network 10 comprises a number of edge routers, such as ingress router 12, and egress routers 14 to 20. As shown, the network 10 also contains additional routers within the network, to provide hops within the network from edge router to edge router. In the example of Figure 3, data flows from an ingress node I ,12, to egress nodes 14 to 20 (E1 to E4), via respective paths, as described previously. As data flows along each path, in the present embodiment at each node in the network along the path the data packets are marked in accordance with the current congestion level at that node. Typically this may be done using ECN marking, as is known in the art, and described for example in IETF RFC 3168. Congestion marks are therefore generated in the network and flow to the egress gateways 14 to 20, where they are measured. Typically this might be done by computing an exponentially weighted moving average (EWMA) of the number of bytes in each congested packet on each path terminating at each egress gateway. The egress gateways 14 to 20 then continuously feed back this congestion information in the form of, for example, the EWMA measurement, to the relevant ingress gateways, in this example ingress gateway 12.

Each ingress gateway 12 also stores several sets of data. More particularly, in a first table ingress gateway 12 stores data relating to the particular "values" which the network operator is prepared to apply to different call types. Table 33 in Figure 7 illustrates examples of call types, and non-limiting examples of the sorts of values which may be applied. Please note that in this example the value scale is arbitrary; in an actual implementation it would need to be related to the congestion scale obtained from the congestion measurements. Here, however, it can be seen that a 999 voice call is given a relatively high value of 100, whereas different types of voice calls, "vox_1" and "vox_2", are given different values. A video call "video_1" is again given a fourth value. Please note that the values may be configured in advance and fixed, or may, in other embodiments be regularly updated, by the network operator.

Each ingress node I, 12, also stores a table of congestion on different paths to egress nodes. Thus, table 35 shows how for each path from the ingress node to an egress node, identified by the egress node, a congestion cost value, based on the received congestion information, is maintained. Note that the values given in 35 are for example only, and are arbitrary. This congestion information is regularly updated, as shown by Figure 5. That is, each ingress node 32 performs the procedure of Figure 5, and updates the path congestion cost information every time it receives EWMA congestion cost information for each path. Thus, the congestion data stored in table 35 is up to date, and reflects the congestion cost of flows presently admitted into the network.

Here, it should be noted that the congestion cost measurements represent the cost to existing network users of admitting another flow into the network. The basic premise of the present embodiment is that admission control should operate to admit new flows into the network when the "value" of admitting that flow outweighs the congestion cost of admitting the flow. In this embodiment the congestion measure is a direct function of the amount of congestion at a link. However, if more high value calls are seeking admission to a link, then they will push the congestion cost higher than low value calls could (because the low value calls are preferentially rejected). Thus although the congestion costs are simple functions of congestion they also (at equilibrium) automatically reflect the value of the calls (actually the marginal value) congesting the link.

In addition to maintaining congestion costs as described, in the present example the ingress nodes 12 also maintain a further estimate of the total load assigned to each path. They do this by updating a path load estimate whenever a new session is admitted and whenever a previously admitted session is completed, taking into account the (expected) average or peak bandwidth consumption for these sessions. The load estimate for path p is denoted by $A_p$.

The path load estimate for each path is used to calculate a path load cost function, parameterised by a path load upper bound $A_p^{UB}$. This cost function assigns a very high cost to paths whose load exceeds the upper bound. An example of such a cost function is

$$c_A(A_p) = \begin{cases} \dfrac{a}{A_p^{UB} - A_p} & \text{if } A_p \leq A_p^{UB} - \dfrac{a}{M} \\ M & \text{otherwise} \end{cases}$$

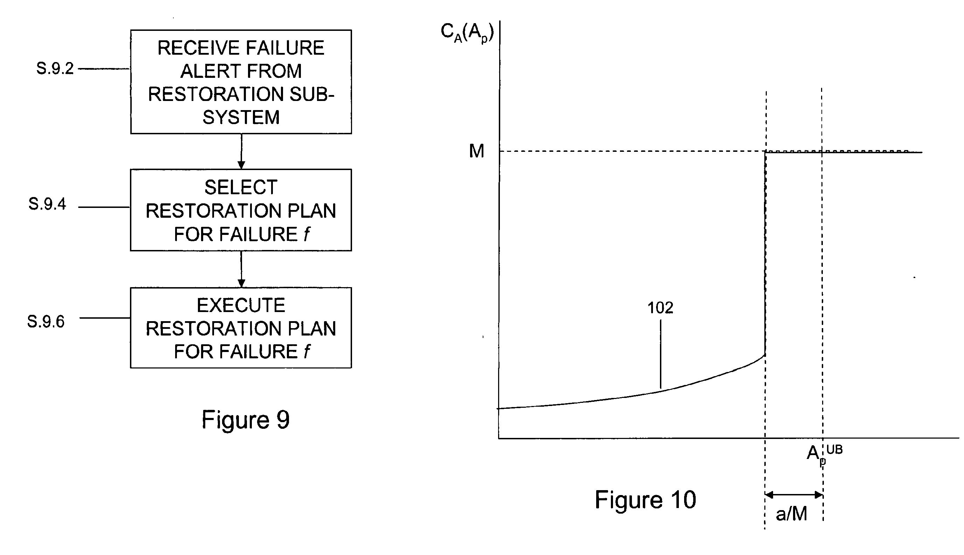

where $M$ is a large number (relative to the value of individual sessions) and $a$ is a suitably chosen positive number. An example load cost function 102 of the above form is shown in Figure 10. The path load cost calculated from the path load cost function is also stored in table 35 for each path, as shown in Figure 7.

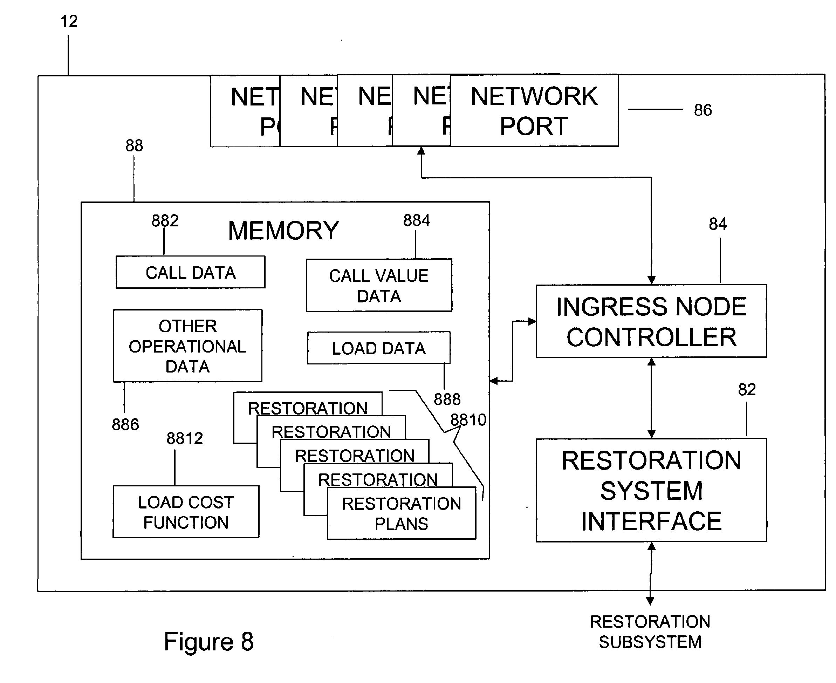

Figure 8 illustrates the internal arrangement of an ingress node 12. Ingress node controller 84 controls the overall operation of the node, as will be described below. Multiple network ports 86 provide interfaces to the network links, and provide the network, data, and physical layer functionality to transmit and receive data over the network links. Memory 88 stores information 882 relating to the sessions presently in progress, session value data 884 (including the information in table 33). Load data 888 is also stored, relating to the present load on each path, and including the information in table 35. Additionally stored are sets of restoration plans 8810, as described in further detail below, and, where the load cost function is calculated at the ingress node, the load cost function 8812 itself.

Finally, each ingress node also has a restoration system interface 82, to allow the node to communicate with a restoration sub-system 72, over logical links therewith. The interface 82 is used to path load and path load cost data to the restoration sub-system, and to receive data relating to restoration plans from the restoration sub-system, as will be described.

Figure 6 illustrates the steps performed by an ingress node 12 when it receives a session request. The operation to be described is performed under the control of the ingress node controller 84, accessing the memory 88 and controlling the network ports 86 as required. More particularly, at step 6.2 the ingress node 12 receives a session request at a network port, and at step 6.4 it looks up the value of this particular type of session from the table 33 in memory 88. Thus, for example, if the session is a voice call of type "vox_1", then the node knows that the network operator has assigned a (arbitrary) value of 64 to such a call type.

Now imagine that the received session request is to transport the session packets from a source A to a destination C. The ingress node 12 knows that to transport packets to destination C, any of the paths to any of egress nodes E1, E2, E3, or E4 can be used. Thus, there are several paths across the network 10 which can be used. At step 6.8, therefore, ingress node 32 looks at the congestion costs stored in table 35 for each route, as well as the path load costs, and determines the route with the lowest sum of the congestion cost and path load cost. In this example, this would be the path to egress node E4. Then, as a check, it determines whether the value of the session is greater than the total cost of the determined route, at step 6.10. If it is larger then at step 6.14 the session is accepted, and the ingress node assigns the session to the determined route i.e. in this case the path to egress node E4, and at step 6.16 performs the necessary control signalling to set up the session on the determined route. On the other hand, however, if the value of the session is less than the present congestion costs of the determined route, the session is rejected, at step 6.12.

With such an arrangement then admission control and route selection are performed at the same time, as an integrated step. Additionally, because the embodiment is able to tailor the mix of session types it accepts depending on the congestion in the relevant resources, better use of the network is provided. For example, the invention will continue to admit high value sessions even when the network is too congested for low value ones. Additionally, the path selection algorithm always chooses the cheapest path, and hence the system is highly effective at balancing the load across resources, regardless of the topology of the network. Because congestion cost information is being fed back to the ingress nodes, additionally the routing algorithm is able to adapt to an efficient path allocation even after dramatic topology changes, such as in the case of network node failures. Finally, because the path load cost is also taken into account, it becomes less likely for sessions to be assigned to paths whose path loads are close to the upper bound, and sessions will be rejected if all suitable paths are loaded at or near their upper bounds.

Each ingress node 12 is also responsible for executing a restoration plan whenever they are notified (possibly by a management system) of the occurrence of a particular failure. Each node maintains for each path p a list of possible restoration paths, stored in memory 88 as restoration plans 8810. A restoration plan can be captured in terms of variables $x_{pq}^{f}$, representing how much load currently allocated to path p can be re-allocated to path $q$ when failure $f$ has been identified. We introduce a special 'termination' path $q^*$ to account for traffic that can (or has to) be terminated. As shown in Figure 9, at step 9.2 when a node learns that failure $f$ has occurred, it selects the restoration plan for failure $f$ from the plans that it has stored, and then executes the plan at step 9.6. The execution of a restoration plan involves reallocating sessions in accordance with the restoration plan variables $x_{pq}^{f}$. That is, firstly up to a total load of $x_{pq_1}^{f}$ will be reallocated from path p to the first restoration path $q_1$. If there are any sessions remaining, up to a total load of $x_{pq_2}^{f}$ will be reallocated from path $p$ to restoration path $q_2$. This process is repeated until all sessions have been re-assigned (or terminated) to restoration paths. By executing such a restoration plan, then service to the sessions presently in existence can be maintained in presence of a failure of a network element.

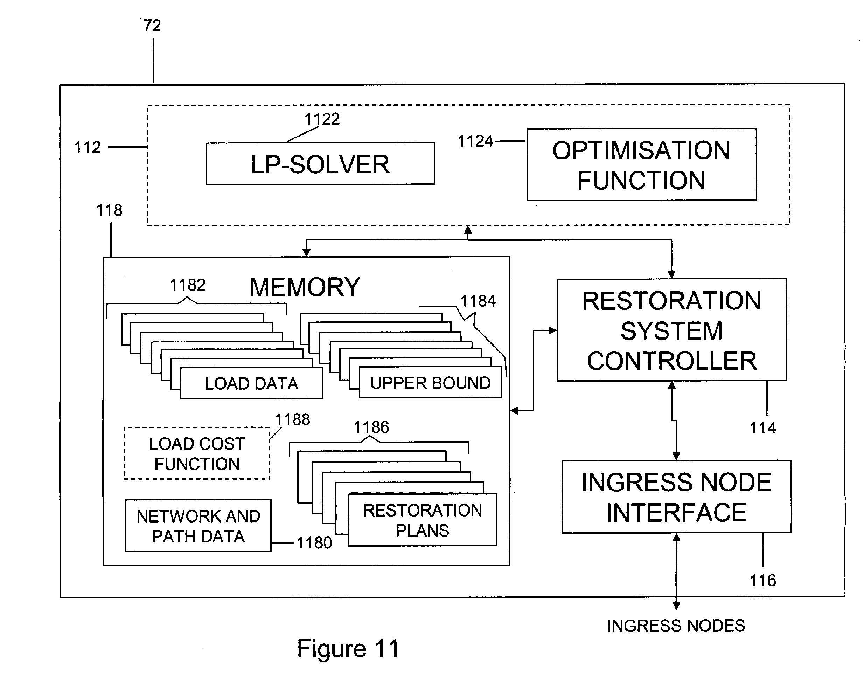

The determination of a restoration plan is typically beyond the ambit of any one particular ingress node, as knowledge needs to be had of the load on substantially all the paths in the network, as well as knowledge of the admission control upper bounds applied by each ingress node. Hence, in the presently described example, the generation of a restoration plan i.e. the actual determination of the values of the restoration variables $x_{pq}^{f}$ is performed by a restoration sub-system 72, shown in more detail in Figure 11.

Figure 11 illustrates the internal components of the restoration subsystem 72. More particularly, the restoration subsystem 72 includes a restoration system controller 114, which acts to control the operation of the restoration subsystem to perform the functions to be described. The restoration system controller 114 communicates with an ingress node interface 116, which permits communications with the ingress nodes, so as to receive information from the ingress nodes (for example load data, load cost data, and the like) as well as to transmit information to the ingress nodes, such as replacement upper bound information, restoration plan variables, etc. The restoration system controller 114 also communicates with a memory 118, which stores all of the data and information necessary for the functioning of the restoration subsystem 72. In particular, the memory 118 stores the various load data 1182 received from the ingress nodes, relating to the load on each path for each node. Additionally stored within the memory 118 is upper bound data 1184, which relates to the respective path upper bounds for paths from each ingress node. There is also provided in the memory 118 network and path data 1180, which represents the topology of the network i.e. the location of nodes, links between nodes, and the like, and, optionally, the load cost function 1188 is also stored, in the case that the restoration subsystem 72 calculates the path load cost for each path. When this option is taken, instead of the path load cost being calculated at each ingress node, based on the load data received from each ingress node for each path the path load cost for each path can be calculated, using the load cost function 1188, at the restoration subsystem 72. Finally, the memory 118 also stores restoration plans 1186, in the form of sets of restoration variables $x_{pq}^{f}$ for each failure $f$, and that are calculated by a restoration plan calculator 112.

More particularly, the restoration plan calculator 112 communicates with the restoration system controller 114, and the memory 118, and comprises a linear programming optimisation function 1124, to be described later, as well as a linear programming solver (lp-solver) 1122. The lp solver module 1122 may be any linear programming solver available, such as, for example, CPLEX, Maple, MatLab, or the like. The optimisation function 1124 is a linear programming problem, together with appropriate constraints, developed to be used in the presently described embodiment so as to calculate restoration plans which maximise the value of admitting sessions to the network when compared to the restoration cost of having to restore admitted sessions from one path to another in the event of a failure. Further details of the optimisation function 1124 are given later.

It is normal to assign the responsibility for creating a restoration plan to a management system, such as restoration sub-system 72. In the present example of an integrated admission control and restoration system, the restoration plan is preferably updated at regular intervals on the basis of information about the current path loads as received from the ingress nodes. The restoration sub-system 72 is also responsible for computing the path load upper bounds.

Generally, and as will be described in further detail later, whenever a new restoration plan (in terms of the $x_{pq}^{f}$ variables described above) and new path load upper bounds $A_{p}^{UB}$ have been computed, the management system sends the new values to the ingress nodes, in order for them to be incorporated in the admission control and restoration execution methods.

Turning now to the calculation of the restoration plans themselves, as mentioned this is performed by the restoration plan calculator block 112, which comprises thee LP-solver 1122, and an optimisation function 1124. The restoration plan should be such that it offers a restoration path for each admitted session provided that the load admitted on each path is smaller than the imposed path load upper bound. There is a clear trade-off between, on the one side, the height of the path load upper bounds and the associated value that can be obtained from admitting sessions to these paths and, on the other side, the cost that will be incurred when sessions have to be terminated in case of a failure. The restoration sub-system explores this trade-off by solving an optimisation problem that assigns a positive value to high path load upper bounds and a negative value to restoration plans that involve terminations.

In the present example the optimisation function is presented as a linear programming problem, which can be solved by using the simplex method or any other convenient algorithm known for the solution of linear programming optimisation functions in the light of given constraints. The outputs of the linear programming problem are replacement path load upper bounds $A_{p}^{UB}$ (to be used in the admission control function of each ingress node) and the restoration plan variables $x_{pq}^{f}$. The path load upper bounds and restoration plans are then sent to the ingress nodes, in order for them to be adopted in the admission control and restoration execution decisions.

With respect to the linear programming optimisation function itself, in the present example we use the following notation:

- $v_p$ : the value of increasing the path load upper bound $A_{p}^{UB}$ by one unit. Typically, this value should be high if the current upper bound is so low that high value sessions are rejected by the admission control system. If path p is already unattractive for other reasons, the value of $v_p$ should be low. One possibility is to set $v_p$ equal to the path load cost $c_A(A_p)$.

- $c_{pq}$: the cost (per bit) incurred when traffic on path $p$ is re-allocated to path $q$.
  Typically, $c_{pq^*}$ is very high for the termination path $q^*$ and $c_{pq}$ is very small (possibly zero) for all genuine restoration paths $q$. $c_{pq}$ may vary for different service classes.

- $\pi_f$ : a weighting factor associated with the probability of failure scenario $f$ materialising during the lifetime of a typical session

- $k_{l}^{f}$ : the capacity of link $l$ after failure $f$ has occurred. If $f$ represents the failure of a single link $l^*$, then $k_{l^*}^{f} = 0$ and $k_{l}^{f} = k_{l}$ for all other links, where $k_l$ is the capacity of link $l$ under normal operation.

- $R_{ql}$: this indicator associates a path with its constituent links. $R_{ql}$ = 1 if link $l$ is used by path $q$. Otherwise, $R_{ql}$ = 0

The optimisation problem 1124 is then formulated as follows:

$$\max \sum_{p} v_{p} A_{p}^{UB} - \sum_{f} \pi_{f} \sum_{p,q} c_{pq} x_{pq}^{f}$$

$$\text{s.t.} \quad \sum_{q} x_{pq}^{f} = A_{p}^{UB} \qquad \text{, for all paths } p \qquad (C1)$$

$$\sum_q R_{ql} \sum_p x_{pq}^f \leq k_l^f \qquad \text{, for all links } l \text{ and all failures } f \qquad (C2)$$

$$A_p^{UB} \geq A_p \qquad \text{, for all paths } p \qquad (C3)$$

$$x_{pq}^f \geq 0 \qquad \text{, for all paths } p, q \text{ and all failures } f$$

$C1$ states that restoration strategies should be defined to deal with a setting in which all paths are loaded up to their upper bound. $C2$ states that, for each of the considered failure scenarios, the load levels that arise after the restoration plan has been executed do not violate any of the link capacity constraints.

The value of $x_{pq*}^f$ can be interpreted as an upper bound on the load associated with sessions on path $p$ that will be terminated when failure scenario $f$ materialises. If termination costs are high enough, only plans for which $x_{pq*}^f = 0$, for all paths $p$ and all failure scenarios $f$, are acceptable. In order to ensure that all currently assigned sessions can be restored, we demand that the load upper bound for each path is at least as high as its current load. This requirement is captured in constraint $C3$.

Note that the restoration cost term $Cpq$ may be variable for different classes of traffic. One class of service may come with a restoration guarantee and we can allocate session only to paths that can be restored completely. Another class of service may be best effort, in which case the system may try to restore the associated sessions, but if this is not possible the sessions are terminated. This can be provided by maintaining different paths for each service class. Then $Cpq*$ can be set to be very high for the path $p$ for the premium service class and $Crq*$ to be much lower for a path $r$ associated with the lower class of service. (Note paths $p$ and $r$ may actually be identical, i.e., using the same links. Traffic assigned to those paths will just be treated differently when a failure occurs.)

A similar case occurs if one service class has very strict jitter requirements and another one does not. Then the first class will have higher $Cpq$ values than the second class, even for normal (non-termination) restoration paths $q$.

With respect to the optimisation function itself, generally this function attempts to maximise the value to the network of increasing the admission control upper bound parameters (which would have the effect of admitting more traffic into the network) whilst taking into account the additional restoration costs that would be incurred by admitting more traffic. Of course, if more traffic is admitted into the network, then there is more traffic to be restored in the event of the failure of a network element, and the point will be reached where it is not possible to restore all of the admitted traffic onto other paths not affected by the failure. In such a case some admitted sessions will need to be terminated, which may incur a high cost. Additionally, as discussed, costs will also likely be incurred in restoring an existing session from one path to another, these costs being variable in dependence on the session type, and the class of service enjoyed by the session. The output of the optimisation function is, as mentioned, new values $A_p^{UB}$ for the path load upper bounds and new restoration plans in the form of restoration variables $x_{pq}^f$, found by the linear programming solver module to maximise the [value - restoration cost] function.

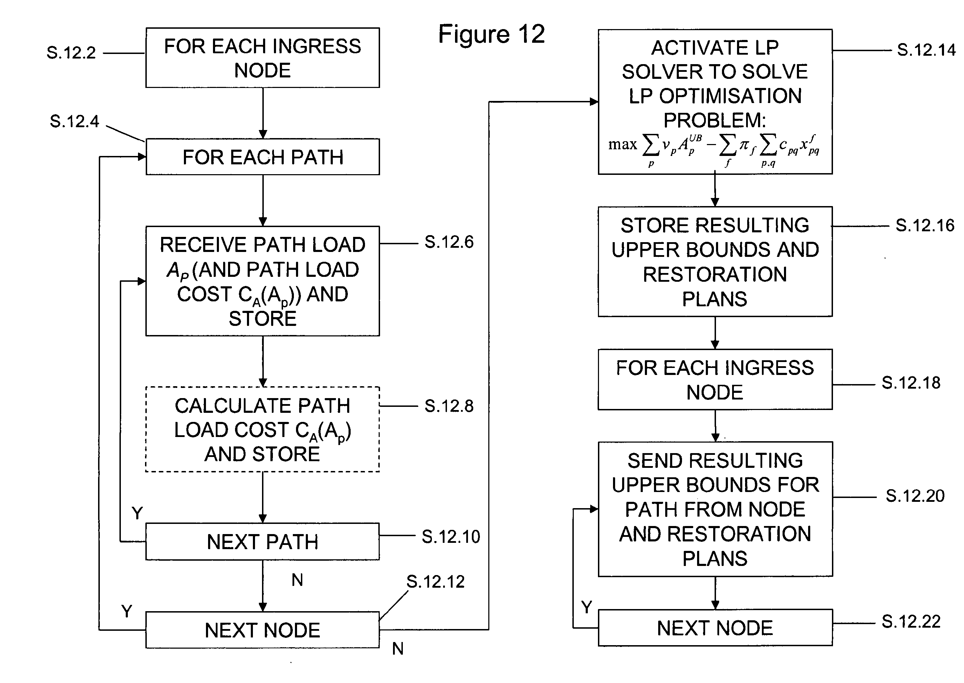

Figure 12 is a flow diagram illustrating the operation of the restoration subsystem 72, to calculate a restoration plan in accordance with the above noted optimisation function. Firstly, at step 12.2 a FOR processing loop is started to process input received at the ingress node interface 116 from each ingress node. Within this processing loop, there is a further processing loop started at step 12.4, which processes each path which begins at each ingress node 12. Within these nested processing loops step 12.6 is performed, and, optionally, step 12.8. At step 12.6 the path load $A_P$ is received for the path presently being processed, that starts at the ingress node presently being processed. Additionally, the path load cost $C_A(A_p))$ is also usually obtained, and particularly where the path load cost is calculated at the ingress nodes. Both the path load $A_P$ and path load cost $C_A(A_p)$ are stored in the load data 1182 in the memory 118, indexed by path and node.

Optionally, where the path load cost $C_a(A_p)$ is not calculated at each ingress node, then at step 12.8 the restoration system controller 114 accesses the load cost function data 1188 in the memory 118, and calculates the path load cost $C_a(A_p)$ for each path presently being processed.

At step 12.10 an evaluation is performed as to whether all of the path load values $A_p$ have been received for all of the paths of the presently processed node, and if there is another path to be processed, then processing returns to step 12.6, to process this next path. Alternatively, once all of the paths for a present node have been processed, then processing proceeds to step 12.12, where a second evaluation is performed to determine whether information has been received from each of the ingress nodes. If there is still an ingress node from which information has not been received, then processing proceeds back to step 12.4, wherein, for the next ingress node, the path load data (and path load cost) are received for each path from that node. Once each of the paths, for each of the nodes, have been processed, i.e. the path load (and path load cost) information has been received for each path for each node, then the evaluation at step 12.12 returns negative, and processing proceeds to step 12.14.

At this point in time, therefore, the restoration subsystem 72 has been provided, through the operation of steps 12.2 to 12.12, with up to date information of present path load on each path in the network. That is, the restoration subsystem 72 has an immediate and up-to-date snapshot of the present network loading, which can be used as an input to the restoration plan calculator 112, which can then calculate replacement restoration plans, as well as path upper bounds, for feeding back to the ingress nodes. Thus, in the present example, the restoration subsystem 72 is able to calculate replacement restoration plans, as well as admission control parameters in the form of the upper bounds, dynamically in dependence on actual present network load data. Using the present example, therefore, restoration planning and admission control can be integrated to provide for repeatedly up-to-date restoration plans, as well as admission control parameters which, if kept to by the admission control systems, can ensure that the restoration plan is sufficient for the present network functionality, i.e. taking into account any present failures in the network. Importantly, however, the restoration plan also takes into account the present load on the network. That is, the admission control parameters and the restoration plan variables are calculated to take into account present network load and the present state of the network.

Therefore, with the present load information in the form of load data 1182 in memory 118, at step 12.14 the restoration system controller 114 can activate the restoration plan calculator 112, and in particular activate the lp solver 1122 to solve the linear programming optimisation function 1124, of the form described previously. As noted, the lp solver 1122 may be any conventional lp solver known already in the art, the operation of which is beyond the scope of the present application. However, the output of the lp solver 1122 given the linear programming optimisation function noted previously is to output replacement path upper bound variables $A_p^{UB}$, as well as restoration plan variables $x_{pq}^f$ for each path in the network. The replacement upper bound variables are stored in the memory 118 as upper bound data 1184, and the replacement restoration plan variables are stored as the restoration plans 1186.

Having obtained replacement upper bound parameters and restoration plan variables, it is then necessary to distribute the upper bounds and the restoration plan variables to the ingress nodes. To accomplish this, at step 12.18 an additional FOR processing loop is started, which, for each ingress node, performs step 12.20 to send the resulting upper bound value $A_p^{UB}$ for a path which emanates from a node to that node, together with the restoration plan variables $x_{pq}^f$ for the paths emanating from that node. This FOR processing loop is repeated for each ingress node, until terminated by the evaluation at step 12.22, when it returns that all the ingress nodes have been processed. At this point, all of the ingress nodes have been provided with updated path upper bound variables, and updated restoration plan variables.

At the ingress nodes, the replacement restoration plan variables are stored in the memory 88, as the restoration plans 8810. In addition, the replacement path upper bound data is also stored in the memory 88. When performing admission control functionality, the replacement upper bound is then used in the calculation of the path load cost, for each path. That is, the replacement upper bound value is put into the path load cost function, described previously, and shown in Figure 10. This has the effect of altering calculated path load cost for each path, which, in turn, will feed through to provide for a different admission control behaviour for the ingress node. For example, if the new path upper bound is reduced in comparison to the previous value, then it is likely that fewer low or medium value sessions will be admitted to the network, and hence the overall load on the network will be reduced. Additionally, as the loading on the network approaches the upper bound, then even higher value sessions may be refused admission to the network. This, again, in turn will reduce the overall load on the network.

Additionally, in the event of a failure f then the ingress node will then execute the updated restoration plan, stored in the memory 88, in the manner described previously.

With the above described operation therefore, the first embodiment provides for the integration of admission control and restoration planning, and also provides for restoration planning to be performed adaptively and dynamically, in dependence on the present load in the network. In particular, replacement restoration plan variables defining how the traffic load should be moved between paths in the event of a failure can be found taking into account the present network loading. At the same time, as part of the same optimisation, admission control parameters, preferably in the form of path upper bounds, are also found, which can then be implemented as part of the admission control function, to ensure that paths are admitted to the extent provided for in the restoration plan variables. Heretofore, no such integration of admission control and restoration planning has ever been undertaken.

If the computation of a new restoration plan takes a long time, there is a risk that the path load levels change considerably between the time the computation is started and the time the obtained solution is implemented. It may be possible that some path loads increase beyond the newly determined upper bounds and that the adopted restoration plans cannot be executed. Typically, this issue will be resolved naturally as load levels decrease when sessions finish. However, we may not want to rely on this. There are at least two approaches to dealing with this issue. In the first approach, we impose a temporary path load upper bound, equal to the path load used in the restoration plan computation, only to be overridden by a new upper bound when the computation is completed. In the second approach, we don't use the current load levels in the restoration plan computation, but we replace them by a higher number to reflect the possible increase during the computation. Also in this case, we could impose temporary upper bounds for the duration of the computation.

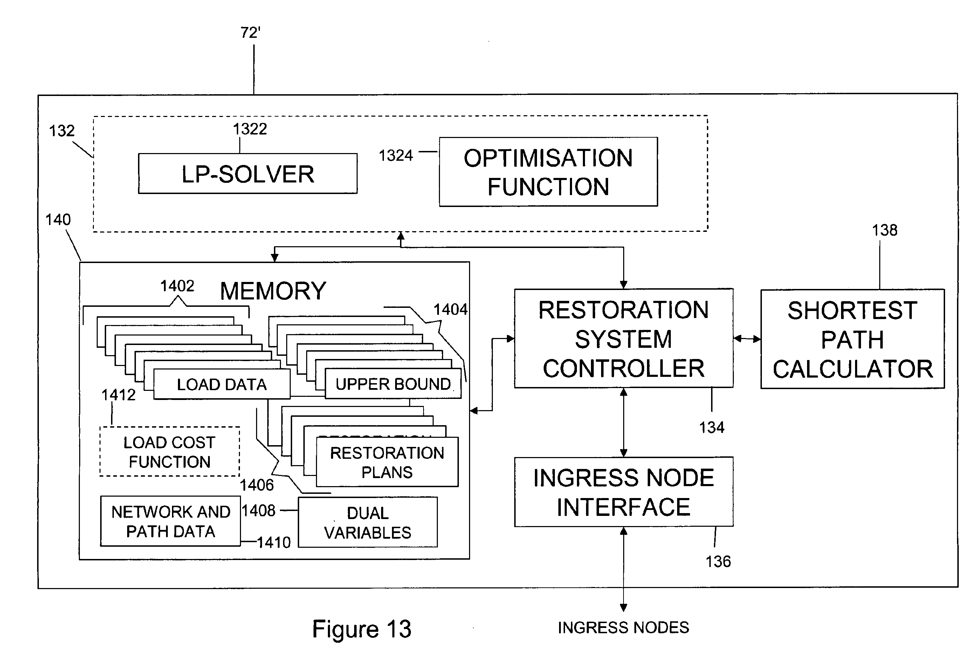

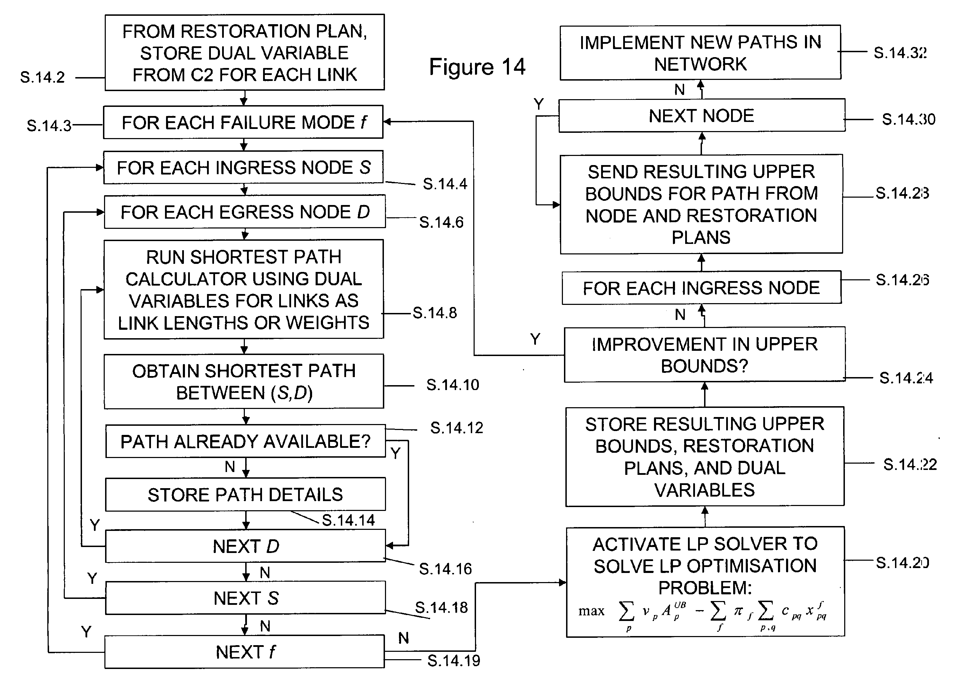

A second embodiment will now be described with reference to Figures 13 and 14. The second embodiment takes as its basis the first embodiment described above, and description will therefore be undertaken of the additional parts or changes necessary to provide the second embodiment.

Typically, in the first embodiment only a small number of paths between a source and a destination are made available to the admission control system and to the restoration sub system. Making more paths available can potentially improve the resilience of the system or increase the utilisation of the network. Most paths, however, have no positive impact at all. In the second embodiment a method for identifying potentially valuable restoration paths is proposed that can be implemented straightforwardly on the restoration sub-system 72, to provide a modified restoration sub-system 72', in accordance with the second embodiment. Generally, the restoration sub-system 72' of the second embodiment obtains, as a by-product of solving the restoration plan optimisation problem, dual variable $y_l^f$ associated with the capacity constraints (C2 in the formulation given previously) for links *l* under failure scenarios *f* and stores these dual variables in the memory 140. It then computes, for each particular failure scenario *f*, and each source-destination (ingress-egress) pair (*s,d*), the shortest path from *s* to *d*, using $y_l^f$ as the link costs. If that path is not yet available to the admission-and-restoration system, then it is put on a list of prospective new restoration paths.

The restoration sub-system 72' then adds the prospective new paths, or a selection, to the optimisation formulation and solves the restoration plan problem with the added paths. If the new solution is better than the previous one, the shortest path computations are performed again using the newly obtained dual variables $y_l^f$. This process is repeated for a limited number of iterations or until no further improvement in the solution to the restoration plan problem is found.

The newly identified restoration paths (or at least those that appear in the latest restoration plan) are then activated by the restoration sub-system and made available to the admission control system.

Further details of the second embodiment will be apparent from Figures 13 and 14, and the following description.

More particularly, restoration subsystem 72' comprises restoration system controller 134, together with ingress node interface 136. The function of ingress node interface 136 is substantially the same as ingress node 116 described previously in respect of the first embodiment, that is it acts to receive load data from the ingress nodes, and to communicate replacement path upper bounds and restoration plan variables to the ingress nodes.

Additionally provided is memory 140, which stores load data 1402, upper bound data 1404, restoration plan variables 1406, and network and path data 1410. The load data, upper bound data, restoration plan variables, and network and path data are substantially the same as the corresponding data stored in the memory 118 of the restoration subsystem 72 of the first embodiment. Also stored in memory 140 is load cost function 1412, and, again, this is the same as in the first embodiment.

Additionally stored in the memory 140 in the second embodiment are the dual variable data 1408, comprising dual variables $y_l^f$. Each dual variable is a shadow variable (or shadow price variable) that represents the extra value that may be generated if the capacity of link *l* in failure scenario *f* would have been one (small) unit higher. Alternatively, a higher value in this context may also be considered as corresponding to a lower restoration cost when a failure *f* occurs. In this respect, a little bit of extra capacity may have allowed for a little bit more traffic to be safely restored. In the second embodiment the dual variables $y_l^f$ are used as link lengths or weights in a shortest path algorithm, to generate additional restoration paths for traffic, as will be described.

Returning to Figure 13, additionally provided in the restoration subsystem 72' is a restoration plan calculator 132, comprising lp solver module 1322, and optimisation function 1324. The lp solver module 1322, and optimisation function 1324 may be identical to the lp solver module 1122, and optimisation function 1124 of the first embodiment, described previously.

Additionally provided in restoration subsystem 72' is the shortest path calculator 138. This uses any known shortest path algorithm to calculate the shortest path for any ingress-egress-pair of nodes in the network. The path lengths or weights required by the shortest path algorithm used by the calculator 138 are taken to be the dual variables $y_l^f$ discussed previously. As example shortest path algorithms that may be used, Dijkstra's shortest path algorithm as used in the conventional open shortest path first (OSPF) routing protocol may be used, as well as , for example, the Belmont Ford algorithm, or the Constrained Shortest Path First algorithm (CSPF). All of these algorithms are well known in the art, and no further description will be undertaken thereof. Whenever the shortest path calculator 138 returns a path which is not already available, then the details of that path are stored in memory as part of the networking path data 1410, and are then used in the next iteration of the solving of the optimisation function, to generate replacement restoration plans, as will be described next with respect to Figure 14.

More particularly, Figure 14 is a flow diagram illustrating the operation of the restoration subsystem 72'. At step 14.2, from a previous restoration plan calculation the dual variables $y_l^f$ obtained from constraint 2 are stored, for each link for each failure scenario $f$. As mentioned, they are stored in dual variable data 1408, indexed by the identifier of each link in the network, and the failure scenario $f$.

There is then commenced a sequence of nested processing loops, beginning at step 14.3, where a processing loop is started to process each failure scenario $f$ and next, at step 14.4, a first nested processing loop is started to process each ingress node s. Thirdly, at step 14.6, a further nested, processing loop is started to process each egress node d. The effect of these nested processing loops is to find, for each failure scenario $f$ and for each possible ingress-egress-pair in the network in a given failure scenario, a possible shortest path between the two nodes. This is performed at step 14.8, wherein the shortest path calculator 138 is activated, using the dual variables $y_l^f$ for each link in the network as the link lengths or weights. As discussed previously, conventional shortest path finding algorithms such as Dijkstra's algorithm may be used here.

At step 14.10 the shortest path between the ingress node s and the egress node d for the failure scenario $f$ presently being processed is obtained, based on the dual variables, and at step 14.12 an evaluation is performed as to whether that path is already available in the network i.e. whether traffic is already being routed over that path. If the path is already available, then there is no need to store details of the found shortest path, as the path has already been taken into account in the restoration planning. In that case, processing proceeds to step 14.16, wherein the next egress node d is selected, for the presently processed ingress node s. Alternatively, if the path is not already available, then at step 14.14 the path details are stored as part of the network path data 14.10. Processing then proceeds to step 14.16, and subsequently to steps 14.18, and 14.19. As mentioned, the effect of the nested processing loops commenced at steps 14.3, 14.4 and 14.6 is to find the shortest path for each ingress-egress pair of nodes in the network in every failure scenario $f$, and store details of that path, if the path is not already used.

Having found the additional shortest path information based on the dual variables $y_l^f$, the restoration planning optimisation is then undertaken again, at step 14.20. That is, the restoration system controller 134 activates the restoration plan calculator 132, and in particular causes the lp solver 1322 to solve the optimisation function 1324 once again, but this time taking into account the new paths found by the shortest path calculator 138, at step 14.8. This results in new path upper bounds and restoration plan variables, as well as new dual variables $y_l^f$. These are stored at step 14.22, as new upper bound data 1404, new restoration plan variables 1406, and new dual variables 1408.

Next, at step 14.24 an evaluation is performed to determine whether there is an improvement in the path upper bounds that are calculated by the lp solver 1322, taking into account the new paths found by the shortest path calculator 138. If there is an improvement in the upper bounds compared to the last iteration of the restoration plan calculator, then that indicates that further improvement may be possible, in which case processing proceeds back to step 14.3, and the process repeats i.e. the shortest path calculator again calculates shortest paths using the new dual variables from the last iteration, any new paths found are stored, and then the restoration plan calculator recalculates the restoration plan variables and path upper bounds using these further paths. This process can continue until no improvement is noticed in the upper bounds, or the improvement obtained from the present iteration compared to the last iteration is small (for example, below some threshold). Alternatively, there may be a limit on the number of iterations that may be performed.

Once one of the above criteria has been met i.e. there is no improvement, a small improvement, or the number of iterations required have been completed, processing proceeds onto step 14.26 wherein a processing loop is commenced to distribute the new path upper bound data and restoration plan variables to the ingress nodes. This is performed at steps 14.28, and 14.30, such that the upper bound data and restoration plan variables are distributed appropriately. Finally, at step 14.32, the new paths found by the shortest path calculator that have been included in the most restoration plan are implemented in the networks, and suitable control signals are sent from the ingress node interface 136 to the ingress nodes so as to implement such new paths.

Thereafter, the ingress nodes perform as described previously, applying the new upper bound values in the path load cost functions, and implementing any restoration plans as appropriate, upon the event of a failure *f*. Additionally, any new paths which are implemented in the network are available to the admission control system in the ingress nodes, onto which incoming sessions may be routed.

With such an arrangement of the second embodiment, then as well as integrating restoration planning and admission control, as in the first embodiment, the restoration planning is enhanced insofar as additional path generation is also accomplished, which additional paths can then be used by both the admission control subsystem, and the restoration planning subsystem. It is expected that, by allowing such path generation to be performed in the restoration planning subsystem, further performance benefits to the network will be obtained.

Various modifications may be made to the above described embodiments to provide further embodiments. For example, in the above described embodiments the ingress nodes perform admission control and path selection, the admission control being performed using the path upper bounds, as described. However, in other embodiments admission control functions and/or path selection functions may be performed in a less distributed manner, for example by a management sub-system (an admission control sub-system) that makes the admission control and/or path selection decisions, and simply communicates the admission control and/or path selection decision to the ingress node. In such a case the ingress nodes may be simpler in design.

The operation of such an admission control sub-system is as follows. When a new flow or session is received at an ingress node, the node communicates the requirements of the session or flow to the admission control sub-system, which makes an admission control decision in the same manner as described previously (i.e. comparing the value of the flow with a cost value, including path load cost), and communicates the decision back to the ingress node. In such a case, the admission control sub-system will need information as to present loading and congestion in the network, but this can be provided in appropriate signalling from the network nodes, for example from the path egress nodes in the case of a congestion measure derived from ECN marks.

Where a separate admission control sub-system is used, then the restoration sub-system of the embodiments would communicate with the admission control sub-system, for example to inform the admission control sub-system of the newly calculated path upper bounds and restoration plans. The path upper bounds are of course required to make admission control decisions, at least in the manner of the first and second embodiments described previously.

Where the restoration plans are sent to the admission control sub-system, it may be that in the event of predetermined failure *f,* the admission control sub-system implements the restorations plans, by controlling the network nodes accordingly. In such a case, there is no need for the restoration plans to be communicated to the network nodes themselves - instead they are sent to an effective proxy controller, in this case the admission control sub-system.

Alternatively, a dedicated restoration plan proxy controller may also be provided, to control the network nodes to implement the restoration plans, when required. In such a case, a restoration plan proxy network element and admission control sub-system (being another network element) may logically exist separate from one another.

In a further modification, the restoration sub-system 72 or 72' may store the restoration plan variables when they are generated, and only send the restoration plan variables out to the network nodes (or other network element such as a restoration plan proxy, as just discussed) when a particular failure occurs, and a specific restoration plan needs implementing. In some respects such an arrangement has several advantages, as there is no need, when new restoration plan variables are calculated by the restoration sub-system 72 or 72', to then distribute the restoration plan variables to the network nodes. That is, in the first and second embodiments, steps 12.18 to 12.22 of the first embodiment, and steps 14.28 to 14.32 in the second embodiment, each of which distribute the restoration plan variables, need not be performed as shown. Instead, the restoration plan variables are stored in the restoration sub-system 72 or 72' (or some proxy element) immediately after generation, and when a failure occurs the restoration plan variables relating to that failure only are distributed to the network nodes for implementation. With such a method signalling overhead in the network is reduced, as well as data storage requirements in the network nodes.

In a yet further modification, whilst restoration plan variables and admission control parameters (such as the path upper bounds) may be generated in the same way as described in the first and second embodiments, it need not be the case that both of these sets of variables are used by the system. For example, it may be that only the restoration plans are used, and the admission control parameters are set aside, and not used by the admission control sub-system. For example, at step 6.8 in the first embodiment, the path load cost is not calculated or not used in the admission control decision, and instead the admission control decision is based only on congestion cost.

Alternatively, it may be that, although generated, the generation plan variables are not put to use, but the admission control parameters that are obtained are used in the admission control system, preferably in the manner described previously. That is, the main purpose of the processing to solve the linear optimisation function then becomes to obtain the admission control parameters, with the generation plans being obtained as a side product. In this case, other restoration plans (for example computed in the conventional fixed manner) may be used in the event of a failure, but the admission control parameters obtained from the dynamic calculation are still used in the admission control system of the network.

Various further modifications, by way of addition, substitution, or deletion, may be made to either of the above described embodiments to provide further embodiments, any and all of which are intended to be encompassed by the appended claims.

**Claims**

1. A method of generating restoration plans for a packet network, comprising the steps:

   a) receiving load data relating to present data traffic in the network;
   b) determining restoration plans in dependence on the received load data, said restoration plans defining the movement of data traffic from one path to another in the event of one or more predetermined network failures; and
   c) communicating said restoration plans to one or more network elements.

2. A method according to claim 1, wherein the determining step b) is performed using an optimisation function that substantially maximises the value to the network of admitting additional data traffic versus the additional restoration cost of such extra traffic.

3. A method according to claims 1 or 2, and further comprising determining one or more admission control parameters in dependence on the received load data, said admission control parameters being communicated to one or more admission control network elements for use in admission control decisions.

4. A method according to claim 3, wherein the restoration plans and admission control parameters are obtained together from the result of solving a linear programming optimisation function.

5. A method according to claims 3 or 4, wherein the admission control parameters are path upper bound values to be used as an input to a path load cost function.

6. A method according to any of claims 1 to 5, and further comprising finding additional paths between ingress and egress nodes in the network using a shortest path finding algorithm that uses respective link shadow variables obtained from the determining step b), and repeating the determining step b) including the additional paths.

7. A method according to claim 6, wherein the determining step b) is repeated until there is no substantial improvement in the restoration plans or admission control parameters obtained.

8. A method of operating a network element in a packet network, comprising the steps:

   receiving one or more restoration plans from a restoration sub-system, said restoration plans defining the movement of data traffic from one path to another in the event of one or more predetermined network failures, and having been generated in accordance with any of the preceding claims; and
   executing at least one of said plurality of restoration plans relating to a predetermined failure in the event of such failure occurring.

9. A method according to claim 8, and further comprising: performing admission control to determine whether data sessions should be admitted to the network; receiving at least one admission control parameter from the restoration sub-system, said admission control being performed in dependence on said received parameter.

10. A method of operating a network element in a packet network, comprising the steps:

    performing admission control to determine whether data sessions should be admitted to the network;

receiving at least one admission control parameter from a restoration sub-system, the admission control parameter having been obtained during the generation of one or more restoration plans defining the movement of data traffic from one path to another in the event of one or more predetermined network failures; said admission control being performed in dependence on said received parameter.

11. A method according to claims 9 or 10, wherein the at least one admission control parameter is a path upper bound relating to a path in the network, said network element further:

calculating a path load cost in dependence on the path upper bound and a present path load, and admitting a new data flow to the network in dependence on a comparison of a value measure of the new flow with at least the calculated path load cost.

12. A computer program or suite of computer programs arranged such that when executed by a computer system it/they cause the computer system to operate in accordance with any of the preceding claims; and/or a machine readable storage medium storing said computer program or at least one of the suite of computer programs.

13. A restoration sub-system arranged in use to generate restoration plans for a packet network, the restoration sub-system comprising:

a) a node interface that in use receives load data relating to present data traffic in the network and communicates restoration plans to one or more network elements
b) a restoration plan calculator that in use determines restoration plans in dependence on the received load data, said restoration plans defining the movement of data traffic from one path to another in the event of one or more predetermined network failures.

14. A network element in a packet network, comprising:

a communications interface arranged in use to receive a plurality of restoration plans from a restoration sub-system according to claim 13, said restoration plans defining the movement of data traffic from one path to another in the event of one or more predetermined network failures; and
a controller that in use executes at least one of said plurality of restoration plans relating to a predetermined failure in the event of such failure occurring.

15. A network element in a packet network, comprising:

an admission control sub-system that in use determines whether data sessions should be admitted to the network; and
an interface that in use receives at least one admission control parameter from a restoration sub-system, the admission control parameter having been obtained during the generation of one or more restoration plans defining the movement of data traffic from one path to another in the event of one or more predetermined network failures;
said admission control subsystem then determining whether data sessions should be admitted to the network in dependence on said received parameter.

FIGURE 1 (PRIOR ART)

FIGURE 2 (PRIOR ART)

FIGURE 3 (PRIOR ART)

427

demand    42

admission
control

424

load
allocation

442

load information

44

444

restoration
plan

admission cost model  ←  restoration
shadow prices  ←  restoration
design

426

448

restoration cost model

446

Figure 4

```
                              ┌─────────────────────┐
                              │  RECEIVE SESSION    │────── S.6.2
                              │     REQUEST         │
                              └─────────────────────┘
                                        │
                                        ▼
                              ┌─────────────────────┐
                              │  LOOK UP SESSION    │────── S.6.4
                              │  VALUE FROM TABLE   │
                              └─────────────────────┘
                                        │
                                        ▼
                              ┌─────────────────────┐
                      S.6.8 ──│  DETERMINE LOWEST   │
                              │  COST (CONG.COST +  │
                              │  LOAD COST) ROUTE   │
                              └─────────────────────┘
```

┌───────────────────────┐
│ RECEIVE EWMA          │
│ CONGESTION COST       │      S.5.2
│ INFORMATION FOR       │
│ EACH PATH             │
└───────────────────────┘
            │
            ▼
┌───────────────────────┐
│ UPDATE PATH           │
│ CONGESTION COST       │
│ INFORMATION           │
└───────────────────────┘
                S.5.4

Figure 5

Figure 6      S.6.16

```
                                                    ┌─────────────────────┐
                                                    │ SET UP SESSION ON   │
                                                    │ DETERMINED ROUTE    │
                                                    └─────────────────────┘
                                                              ▲
                                                              │
   ┌─────────────────────┐          Y           ┌─────────────────────┐
S.6.10 │ IF VALUE > COST OF  │─────────────────────▶│ ASSIGN SESSION TO   │
   │ DETERMINED ROUTE    │                      │ DETERMINED ROUTE    │
   └─────────────────────┘                      └─────────────────────┘
            │ N                                           S.6.14
            ▼
   ┌─────────────────────┐
S.6.12 │   REJECT SESSION    │
   └─────────────────────┘
```

Figure 7

RESTORATION SUB-SYSTEM

| Call Type | Value |
|-----------|-------|
| 999 | 100 |
| Vox_1 | 64 |
| Vox_2 | 33 |
| Video_1 | 50 |

| PATH | CONG. COST | LOAD COST |
|------|-----------|-----------|
| I-R1-R2-R4-E1 | 42 | 44 |
| I-R1-R3-R4-E1 | 26 | 2 |
| I-R3-R5-E3 | 23 | 2 |
| I-R7-R6-E4 | 8 | 1 |

Figure 8

EP 2 237 479 A1

Figure 10

Figure 9

72

112 ———

1122

## LP-SOLVER

1124 ——— OPTIMISATION FUNCTION

118

MEMORY

1182

LOAD DATA

1184

UPPER BOUND

RESTORATION SYSTEM CONTROLLER

114

1188

LOAD COST FUNCTION

1186

RESTORATION PLANS

NETWORK AND PATH DATA

1180

INGRESS NODE INTERFACE

116

INGRESS NODES

Figure 11

Figure 12

S.12.2 — FOR EACH INGRESS NODE

S.12.4 — FOR EACH PATH

RECEIVE PATH LOAD $A_P$ (AND PATH LOAD COST $C_A(A_p)$) AND STORE — S.12.6

CALCULATE PATH LOAD COST $C_A(A_p)$ AND STORE — S.12.8

NEXT PATH — S.12.10

NEXT NODE — S.12.12

ACTIVATE LP SOLVER TO SOLVE LP OPTIMISATION PROBLEM: — S.12.14

$$\max \sum_p v_p A_p^{UB} - \sum_f \pi_f \sum_{p,q} c_{pq} x_{pq}^f$$

STORE RESULTING UPPER BOUNDS AND RESTORATION PLANS — S.12.16

FOR EACH INGRESS NODE — S.12.18

SEND RESULTING UPPER BOUNDS FOR PATH FROM NODE AND RESTORATION PLANS — S.12.20

NEXT NODE — S.12.22

Figure 13

EP 2 237 479 A1

## Figure 14

S.14.2 — FROM RESTORATION PLAN, STORE DUAL VARIABLE FROM C2 FOR EACH LINK

S.14.3 — FOR EACH FAILURE MODE $f$

S.14.4 — FOR EACH INGRESS NODE $S$

S.14.6 — FOR EACH EGRESS NODE $D$

S.14.8 — RUN SHORTEST PATH CALCULATOR USING DUAL VARIABLES FOR LINKS AS LINK LENGTHS OR WEIGHTS

S.14.10 — OBTAIN SHORTEST PATH BETWEEN $(S,D)$

S.14.12 — PATH ALREADY AVAILABLE?

S.14.14 — STORE PATH DETAILS

S.14.16 — NEXT $D$

S.14.18 — NEXT $S$

S.14.19 — NEXT $f$

S.14.20 — ACTIVATE LP SOLVER TO SOLVE LP OPTIMISATION PROBLEM:

$$\max \sum_{p} v_p A_p^{UB} - \sum_{f} \pi_f \sum_{p,q} c_{pq} x_{pq}^f$$

S.14.22 — STORE RESULTING UPPER BOUNDS, RESTORATION PLANS, AND DUAL VARIABLES

S.14.24 — IMPROVEMENT IN UPPER BOUNDS?

S.14.26 — FOR EACH INGRESS NODE

S.14.28 — SEND RESULTING UPPER BOUNDS FOR PATH FROM NODE AND RESTORATION PLANS

S.14.30 — NEXT NODE

S.14.32 — IMPLEMENT NEW PATHS IN NETWORK

28

Europäisches
Patentamt

European
Patent Office

Office européen
des brevets

# EUROPEAN SEARCH REPORT

Application Number

EP 09 25 0992

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 7 092 378 B1 (O'NEIL JOSEPH THOMAS [US]) 15 August 2006 (2006-08-15)<br>* figures 1,7-9,12,21-23,33 *<br>* column 2, line 42 - line 57 *<br>* column 4, line 2 - line 12 *<br>* column 4, line 35 - line 61 *<br>* column 12, line 51 - line 67 *<br>----- | 1-9,<br>12-14<br>10,11,15 | INV.<br>H04L12/24 |
| Y<br><br>A | US 2006/050635 A1 (YAMADA HITOSHI [JP] ET AL) 9 March 2006 (2006-03-09)<br>* paragraphs [0041], [0050], [0052] - [57.91]; figures 1-3,7,9 *<br>----- | 10,11,15<br>1-9,<br>12-14 | |
| A | US 2005/174934 A1 (KODIALAM MURALIDHARAN S [US] ET AL) 11 August 2005 (2005-08-11)<br>* paragraphs [0012] - [0019], [0057], [0058]; figures 1,2 *<br>----- | 1-9,<br>12-14 | |
| A | US 2003/067867 A1 (WEIS BERND X [DE])<br>10 April 2003 (2003-04-10)<br>* paragraphs [0009] - [0011], [0033], [0100]; figures 3,9,13 *<br>----- | 1-9,<br>12-14 | TECHNICAL FIELDS SEARCHED (IPC)<br><br>H04L |

The present search report has been drawn up for all claims

| Place of search | Date of completion of the search | Examiner |
|---|---|---|
| Munich | 29 July 2009 | Nold, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 25 0992

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2009

| Patent document cited in search report | | Publication date | Patent family member(s) | | Publication date |
|---|---|---|---|---|---|
| US 7092378 | B1 | 15-08-2006 | NONE | | |
| US 2006050635 | A1 | 09-03-2006 | JP | 2006074600 A | 16-03-2006 |
| US 2005174934 | A1 | 11-08-2005 | NONE | | |
| US 2003067867 | A1 | 10-04-2003 | AT | 268081 T | 15-06-2004 |
| | | | CN | 1379573 A | 13-11-2002 |

For more details about this annex : see Official Journal of the European Patent Office, No. 12/82